Europäisches Patentamt

European Patent Office

Office européen des brevets

(19)

(11) Veröffentlichungsnummer: **0 027 179**
**B1**

(12) # EUROPÄISCHE PATENTSCHRIFT

(45) Veröffentlichungstag der Patentschrift:
**18.07.84**

(51) Int. Cl.³: **F 04 D 9/00**, B 01 D 19/00,
F 24 D 19/08

(21) Anmeldenummer: **80105408.1**

(22) Anmeldetag: **10.09.80**

(54) **Pumpe mit Entgaser.**

(30) Priorität: **13.09.79 DE 7926052 U**

(43) Veröffentlichungstag der Anmeldung:
**22.04.81 Patentblatt 81/16**

(45) Bekanntmachung des Hinweises auf die Patenterteilung:
**18.07.84 Patentblatt 84/29**

(84) Benannte Vertragsstaaten:
**AT BE CH DE FR GB IT LI LU NL SE**

(56) Entgegenhaltungen:
**DE - A - 1 937 119**
**DE - A - 2 346 286**
**DE - B - 1 171 746**
**GB - A - 1 458 192**

(73) Patentinhaber: **Joh. Vaillant GmbH u. Co, Berghauser Strasse 40 Postfach 10 10 20, D-5630 Remscheid 1 (DE)**
(84) Benannte Vertragsstaaten: **DE IT LU SE**

(73) Patentinhaber: **COFRABEL N.V., Goldenhopestraat 15, B-1620 Drogenbos (BE)**
(84) Benannte Vertragsstaaten: **BE**

(73) Patentinhaber: **VAILLANT S.A.R.L, 4, Rue des Oliviers Orly-Sénia 326, F-94537 Rungis Cedex (FR)**
(84) Benannte Vertragsstaaten: **FR**

(73) Patentinhaber: **VAILLANT Ges.m.b.H, Forchheimergasse 7 Postfach 56, A-1233 Wien (AT)**
(84) Benannte Vertragsstaaten: **AT**

(73) Patentinhaber: **SCHONEWELLE B.V., Ellermanstraat 17, NL-1099 BX Amsterdam (NL)**
(84) Benannte Vertragsstaaten: **NL**

(73) Patentinhaber: **VAILLANT LIMITED, Heston Industrial Estate Aerodrome Way, GB-Hounslow TW5 9PU Middx. (GB)**
(84) Benannte Vertragsstaaten: **GB**

(73) Patentinhaber: **Vaillant GmbH, Riedstrasse 8, CH-8953 Dietikon 1 (CH)**
(84) Benannte Vertragsstaaten: **CH LI**

(72) Erfinder: **Meier, Hans, An der Kirche 6, D-5828 Ennepetal-Voerde (DE)**

(74) Vertreter: **Helm, Johann-Ludwig, c/o Joh. Vaillant GmbH u. Co Berghauser Strasse 40, D-5630 Remscheid (DE)**

BUNDESDRUCKEREI BERLIN



## Beschreibung

Die vorliegende Erfindung bezieht sich auf eine Pumpe gemäß dem Oberbegriff des Hauptanspruchs. Eine solche Pumpe ist bekannt aus der DE-A-1 937 119.

Aus der DE-C-2 346 286 ist eine Vorrichtung zur Gasabscheidung mit einem an einer Pumpe angeordneten Entgaser bekanntgeworden, bei der der Fluidzulauf am unteren Ende angeordnet ist und ein Strömungsteiler vorgesehen ist, der den gashaltigen Fluidstrom in einen größeren Stromanteil Richtung Pumpe und in einen kleineren Fluidstromanteil Richtung eines Entgasers, der zur Pumpe mithin parallel liegt, aufteilt. In dem Entgaser bildet sich durch tangentiale Anschneidung des Fluidvolumens über eine Öffnung ein Wirbel, am oberen Ende der Entgaserkammer sitzt in Verlängerung der Achsrichtung des entstehenden Wirbels ein Schnellentlüfter.

Die eben beschriebene Anordnung weist gleichfalls den Nachteil auf, daß die Entgasung bei ausgeschalteter Pumpe verbesserungsbedürftig ist, da Gasblasen in die Laufradkammer der Pumpe gelangen können, wodurch bei zu niedrigem Fluidstand in der Laufradkammer die Pumpe nicht ansaugen kann. Im Falle des drehenden Laufrades wird ein zu großer Anteil des Gases am Entgaser vorbei in die Laufradkammer mitgerissen, so daß die Entgasung erst nach einer Vielzahl von Umläufen des zu entgasenden Fluids durch die Baueinheit befriedigend erfolgt ist. Erfolgt ein zu großer Luftdurchsatz am Entgaser vorbei in die Laufradkammer, so reißt die Strömung ab und die Förderung kommt nahezu zum Stillstand. Es dauert sehr lange, bis die Pumpe sich ohne äußeren Eingriff von der Gasblase befreit, die aber über den Druckstutzen in die Heizungsanlage entweicht, von wo sie wieder zur Pumpe gelangt, die bei Brauchwasserbereitung im unteren Bereich des Wasserkreislaufes des Gerätes liegt.

Aus der DE-B 1 171 746 ist eine auf einem gesonderten Fundament aufgebaute Abwasserkreiselpumpe bekanntgeworden, die sich mit dem Problem befaßt, gashaltiges Abwasser fördern zu müssen. Hierzu werden die Gasblasen nicht aus der Flüssigkeit abgeschieden, sondern im Gegenteil, so fein verteilt dem Abwasser beigegeben, daß die Pumpe das Abwasser mit samt dem Gas zu fördern imstande ist. Zudem muß eine Abwasserpumpe auch Feststoffe fördern, es kommt bei einer Abwasserpumpe nicht auf einen kontinuierlichen gleichmäßigen Förderstrom an.

Die aus der DE-A 1 937 119 bekannte Kreiselpumpe befaßt sich mit dem Problem der Abgasabscheidung und schlägt hierzu vor, den Saugmund des Pumpenrades mit einer senkrecht stehenden Abschirmplatte abzuschirmen. Es ist nicht einzusehen, daß eine von unten mit dem einströmenden Wasser in Kontakt kommende Abschirmplatte die Gasanteile vom Pumpenmund fernhält und in einen Abscheider befördert. Vielmehr werden die Gasblasen sowohl die Pumpe als auch den Raum jenseits der Abschirmplatte durchsetzen, das Gas wird sich ferner im obersten Teil des Einlaßraums der Pumpe sammeln und erst dann in den Abscheider gelangen, wenn der Wasserspiegel in der Pumpe auf ein gewisses Niveau zurückgefallen ist. Dann gelangt aber Gas in den Pumpenmund und in der Pumpe nachgeschaltete Anlagenteile. Weiterhin ist bei dieser Entgegenhaltung nicht für den ganzen Durchsatz eine Wasserbewegung in die Senkrechte vorhanden, wodurch die Abscheidewirkung mangelhaft bleiben wird.

Für ein Übertragen der aus der einen Entgegenhaltung bekannten Maßnahmen auf die andere besteht kein Anlaß, da mit der DE-B-1 171 746 von einem Abscheiden der Gasblasen abgeraten wird, vielmehr sollen die Gasblasen in der Flüssigkeit verbleiben.

Aus der GB-A 1 458 192 ist weiterhin eine Umwälzpumpe für eine Zentralheizungsanlage bekannt, bei der die gesamte Flüssigkeitsmenge eine Umlenkstelle im Entgaser durchströmt und die Strömungsrichtung nach der Umlenkung abwärts gerichtet ist. Hier aber können sich bei stehender Pumpe Gasblasen unmittelbar vor dem Laufrad ansammeln, weil die Verbindung zwischen dem Auslaß des Entgasers und dem Pumpeneinlaß nicht gegen die Durchströmrichtung nach oben geneigt ist.

Der vorliegenden Erfindung liegt die Aufgabe zugrunde, eine Pumpe zu schaffen, welche sowohl bei der Erstfüllung einer Heizungsanlage als auch bei Stillstand der Heizungsanlage sofort bei Beaufschlagung des zugehörigen Motors ansaugt, d. h. auch eine weitergehende Entgasung bei Stillstand ermöglicht und bei der weiterhin eine ausreichende Entgasung des durchzusetzenden Fluids bei kreisendem Pumpenrad stattfindet, auch dann, wenn aus irgendwelchen Gründen eine größere Gasblase in die Pumpe gelangt.

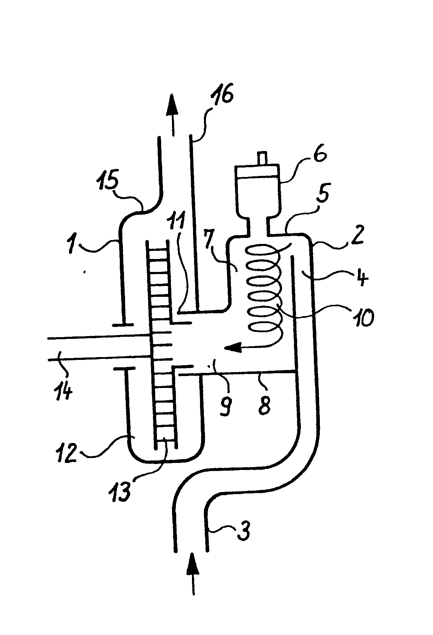

Die Lösung dieser Aufgabe gelingt mit den im kennzeichnenden Teil des Hauptanspruchs angegebenen Mitteln. Weitere Ausgestaltungen und besonders vorteilhafte Weiterbildungen der Erfindung sind aus der nachfolgenden Beschreibung sowie der Figur der Zeichnung ersichtlich, die ein Ausführungsbeispiel der Erfindung im Schnitt schematisch darstellt.

Eine Pumpe 1 bildet mit einem Entgaser 2 eine Baueinheit, d. h., beide sind aus einem gemeinsamen Grauguß- oder Druckgußteil gefertigt. Die Pumpe ist als Kreiselpumpe ausgebildet und im Zuge eines Heizungssystems angeordnet, das eine Wärmequelle, wie einen Kessel oder Umlaufwasserheizer sowie eine Vielzahl von Verbrauchern in Form eines Brauchwasserbereiters und/oder Radiatoren, aufweist. Wärmequelle und Verbraucher sind über Vor- und Rücklaufleitungen miteinander verbunden, im Zuge der Rücklaufleitung ist die Baueinheit eingeschaltet. Somit mündet eine von den Verbrauchern kommende Rücklaufleitung an einem Einlaßrohr 3 für den Entgaser 2, das Einlaßrohr 3 mündet in Form eines Einlaßstutzens 4 kurz unterhalb eines Dekkels 5 des Entgasers 2.

In den Deckel 5 des Entgasers 2 ist ein Schnellentlüfter 6 eingesetzt. Der Einlaßstutzen 4, der das zu entgasende Fluid (Heizungswasser) führt, mündet zwar in Axialrichtung der zylinderisch ausgestalteten Entgaserkammer 7, kann aber auch im Bereich seines Endes eine tangentiale Abbiegung aufweisen, so daß das aus dem Einlaßstutzen 4 in die Entgaserkammer 7 austretende Fluid einen Drall 10 bekommt. Am unteren Ende 8 ist ein Auslaßstutzen 9 für den Entgaser vorgesehen, dessen Querschnitt größer ist als der Querschnitt des Einlaßstutzens 4. Der Auslaßstutzen 9 mündet radial oder tangential im Zylindermantel der Entgaserkammer 7. Der Schnellentlüfter 6 ist so im Deckel 5 angeordnet, daß er oberhalb der Achse dieses Dralls 10 vorgesehen ist. Der Auslaßstutzen 9 des Entgasers liegt auf einem tieferen Niveau als das Ende des Einlaßstutzens 4 des Entgasers, in Betriebslage liegt die Verbindung zwischen dem Auslaßstutzen 9 und dem Saugstutzen 11 der Pumpe mit ihrer Achse mehr oder weniger so geneigt, daß ihr Niveau in Richtung Entgaserkammer 7 ohne Hinterschneidung ansteigt.

Der Auslaßstutzen 9 bildet ein Rohr, das unmittelbar in den Pumpensaugstutzen 11 übergeht, in dem der Saugmund des Laufrades angeordnet ist. Der Pumpensaugstutzen ist im Inneren einer Pumpenkammer 12 vorgesehen, in der sich ein Pumpenlaufrad 13 mit einer Antriebswelle 14 dreht, die von einem nicht weiter dargestellten Motor angetrieben ist. Die Achse der Welle 14, die des Laufrades 13 und die des Saugstutzens fluchten miteinander.

Am oberen Ende 15 der Pumpenkammer ist ein Druckstutzen 16 für das die Pumpenkammer 12 verlassende entgaste Heizungswasser vorgesehen. Dieser Druckstutzen 16 steht in Verbindung mit der zum Rücklauf der Wärmequelle führenden Leitung.

Die Achsen des Einlaßrohres 3 sowie des Druckstutzens 16 fluchten miteinander. Das bedeutet, daß die Baueinheit aus Pumpe 1 und Entgaser 2 gemäß der Erfindung in ein Rohr einer Heizungsanlage eingefügt werden kann, indem einfach ein entsprechend langes Rohrteil aus dem bestehenden Rohr herausgetrennt wird und statt dessen die Baueinheit eingefügt wird. Ferner kann die Baueinheit gegen eine andere Pumpe ausgetauscht werden. Bevorzugt benutzt man hierzu ein senkrecht stehendes Rohr mit aufwärts verlaufendem Förderstrom, so daß in der Betriebslage die bereits erwähnte Achse durch die Welle 14 und das Laufrad 13 waagerecht steht. Der Saugstutzen 11 der Pumpe liegt etwas tiefer als der Auslaßstutzen 9 des Entgasers. Steigt mithin aus dem Einlaßrohr 3 Luft bei der Erstfüllung oder bei einem Stillstand der Heizungsanlage auf und wird das in der Pumpenkammer 12 befindliche Wasser durch die aufsteigende Luft verdrängt, so kann diese Luft durch die geneigte Lage der Verbindung zwischen dem Saugstutzen 11 der Pumpe und dem Auslaßstutzen 9 des Entgasers auf Grund des Auftriebs über diesen und die Entgaserkammer 7 in Richtung auf den auf höchsten Niveau angeordneten Schnellentlüfter 6 entweichen. Ebenso kann die unmittelbar über das Einlaßrohr eindringende Luft direkt über den Einlaßstutzen 4 und den oberen Bereich der Entgaserkammer 7 über den Schnellentlüfter abgeschieden werden. Das bedeutet, daß die tieferliegende Pumpenkammer 12 regelmäßig entlüftet ist, so daß auf jeden Fall das Laufrad 13 Wasser fördert, die Pumpe also anlaufen kann und fördert. Die Neigung des Auslaßstutzens kann sowohl durch eine entsprechende Gestaltung des Auslaßstutzens 9 selbst als auch durch eine besondere Einbaulage erzielt werden.

Es ist somit am vorteilhaftesten, den Saugstutzen 11 auf tiefstem Niveau vorzusehen, den Auslaßstutzen 9 auf höherem Niveau bezogen auf den Saugstutzen und den Einlaßstutzen 4 des Entgasers auf noch höherem Niveau anzuordnen als den Auslaßstutzen 9. Hierdurch wird erreicht, daß die aus dem Einlaßstutzen 4 austretenden Gasblasen nicht erst am Saugstutzen 11 vorbeigefördert werden müssen, um zum Entgaser 2 zu gelangen (vgl. DE-A-2 346 286), sondern über den Entgaser erst zum Saugstutzen geführt werden.

**Patentanspruch**

Pumpe zum Umwälzen des Wassers einer Zentralheizungsanlage mit einem in senkrechter Richtung liegenden Einlaßrohr (3) und einem damit fluchtenden Druckstutzen (16) sowie einem zwischen Einlaßrohr und Pumpengehäuse vorgesehenen, mit dem Pumpengehäuse eine Baueinheit bildenden Entgaser (2) mit Entlüfter (6), der von dem auf einem tiefen Niveau anfangenden Einlaßstutzen (4) angeströmt ist und eine Umlenkstelle nahe seiner höchsten Stelle in Richtung seinem Auslaß (9) aufweist, der mit einem Saugstutzen (11) der Pumpe verbunden ist, dadurch gekennzeichnet, daß der ganze Durchsatz die Umlenkstelle nahe der höchsten Stelle des Entgasers durchströmt und der Verlauf der zu entgasenden Flüssigkeit von der Umlenkstelle bis zum Auslaß (9) ausschließlich abwärts gerichtet ist, daß der Entlüfter an der höchsten Stelle des Entgasers angeschlossen ist, daß die Verbindung zwischen dem Auslaß (9) des Entgasers und dem Saugstutzen der Pumpe gegen die Durchströmrichtung nach oben geneigt ist und im Querschnitt größer gehalten ist als der Querschnitt des Einlaßstutzen (4).

**Claim**

A pump for circulating the water in a central heating system comprising a vertical inlet pipe (3), a pressure fitting (16), which is aligned with the inlet pipe, and a degasser (2), which is provided between the inlet pipe and the pump housing and together with the pump housing constitutes a unit and is provided with a venting device (6), and is supplied from the inlet fitting (4), which begins on a low level, said degasser having close to its uppermost point means for deflecting the flow toward the outlet (9) of the degasser, which outlet communicates with a suction fitting (11) of the pump, characterized in that the entire stream flows through the deflecting means near the uppermost point of the degasser, the liquid to be degassed flows only downwardly from the deflecting means to the outlet (9), the venting device is connected to the uppermost point of the degasser, and the connection between the outlet (9) of the degasser and the suction fitting of the pump is upwardly inclined opposite to the direction of flow and is larger in cross-section than the inlet fitting (4).

## Revendication

Pompe de circulation pour l'eau d'une installation de chauffage central, comportant un tube d'entrée (3) disposé verticalement et une tubulure de refoulement (16) alignée sur ce tube, ainsi qu'un dégazeur (2) avec purgeur (6), prévu entre le tube d'entrée et le corps de la pompe et formant avec ce corps de pompe une unité, et muni de la tubulure d'entrée (4) qui commence à un niveau bas, et présentant à proximité de son point le plus élevé une déviation en direction de sa sortie (9) qui communique avec une tubulure d'aspiration (11) de la pompe, caractérisée par le fait que le fluide dans sa totalité suit la déviation à proximité du point le plus élevé du dégazeur et s'écoule en descendant de la déviation juqu'à la sortie (9), que le purgeur est monté au point le plus élevé du dégazeur, que le passage entre la sortie (9) du dégazeur et la tubulure d'aspiration de la pompe présente une pente ascendant dans le sens opposé au sens d'écoulement et que sa section est plus grande que celle de la tubulure d'entrée (4).